Europäisches Patentamt

European Patent Office

Office européen des brevets

(19)

(11) Veröffentlichungsnummer: **0 302 266**

**A2**

(12) **EUROPÄISCHE PATENTANMELDUNG**

(21) Anmeldenummer: **88111189.2**

(22) Anmeldetag: **13.07.88**

(51) Int. Cl.⁴: **B29C 65/20 , B65D 8/22**

(30) Priorität: **06.08.87 DE 3726086**
**08.04.88 FR 8804796**

(43) Veröffentlichungstag der Anmeldung:
**08.02.89 Patentblatt 89/06**

(84) Benannte Vertragsstaaten:
**AT BE CH ES GB GR IT LI LU NL SE**

(71) Anmelder: **SOTRALENTZ S.A.**
**24, Rue du Professeur-Froehlich**
**F-67320 Drulingen(FR)**

(72) Erfinder: **Pfeiffer, Pierre**
**26, Rue d'Ottwiller**
**F-67 320 Drulingen(FR)**
Erfinder: **Cheval, Benôit**
**31, Rue Clemenceau**
**F-67 700 Saverne(FR)**
Erfinder: **Sigwalt, Paul**
**22, Rue de Phalsbourg**
**F-67 320 Drulingen(FR)**

(74) Vertreter: **Andrejewski, Walter et al**
**Patentanwälte Andrejewski, Honke & Partner**
**Postfach 10 02 54 Theaterplatz 3**
**D-4300 Essen 1(DE)**

(54) Verfahren und Anlage zur Herstellung eines Spundfasses aus thermoplastischem Kunststoff und nach dem Verfahren hergestelltes Spundfass.

(57) Verfahren zur Herstellung eines Spundfasses aus thermoplastischem Kunststoff mit Bodenteil, Deckelteil und Mantel, wobei Bodenteil und Deckelteil ein Mantelteilstück aufweisen sowie eine Spundfaßhälfte bilden und wobei die beiden Spundfaßhälften mit einer umlaufenden Verbundnaht unter Anwendung jeweils in eine Hilfsvorrichtung eingesetzt, die eine Aufnahme und eine Abstützeinrichtung für die jeweilige Spund faßhälfte aufweisen und in axialer Richtung gegeneinander verfahrbar sind. Die beiden Spundfaßhälften werden im Bereich der herzustellenden Verbundnaht von einem Zentrierring aufgenommen, der über den Umfang verteilte Saugnäpfe aufweist. Ein Schweißkragen steht zur herzustellenden Verbundnaht hin über die Zentrierringe vor. Zwischen den beiden Hilfsvorrichtungen mit den beiden Spundfaßhälften wird ein Heizkranz angeordnet, in den die Schweißkragen eingeführt und in dem die Schweißkragen auf Schweißkragentemperatur erwärmt werden. Danach werden die Hilfsvorrichtungen auseinandergefahren. Der Heizkranz wird entfernt. Im Anschluß daran werden die mit Hilfe der Zentrierkragen zentrierten Spundwandhälften gegeneinandergefahren und die Schweißnaht wird als Stumpfschweißnaht hergestellt.

EP 0 302 266 A2

# Verfahren und Anlage zur Herstellung eines Spundfasses aus thermoplastischem Kunststoff und nach dem Verfahren hergestelltes Spundfaß

Die Erfindung bezieht sich gattungsgemäß auf ein Verfahren zur Herstellung eines Spundfasses aus thermoplastischem Kunststoff mit Bodenteil, Deckelteil und Mantel, wobei Bodenteil und Deckelteil ein Mantelteilstück aufweisen sowie eine Spundfaßhälfte bilden und wobei die beiden Spundfaßhälften mit einer umlaufenden Verbundnaht unter Anwendung von Wärme vereinigt werden. Die Erfindung bezieht sich fernerhin auf eine Anlage für die Durchführung eines solchen Verfahrens und auf nach dem Verfahren hergestellte Spundfässer. Der Ausdruck Spundfaßhälften wird auch für Ausführungsformen verwendet, bei denen die beiden Teile des herzustellenden Spundfasses nicht gleich groß sind, die Verbundnaht also nicht im Bereich der Mitte des Mantels verläuft. Solche Spundfässer sind in ihrem grunsätzlichen Aufbau bekannt (vgl. EP 0 162 117, US 16 82 403). Noch fehlen ein Verfahren und eine Anlage, welche auf einfache Weise und weitgehend automatisch die Herstellung eines Spundfasses aus zwei durch Spritzgießen vorgeformten Spundfaßhälften ermöglicht.

Aufgabe der Erfindung ist es, ein solches Verfahren, eine geeignete Vorrichtung sowie entsprechende Spundfässer anzugeben.

Zur Lösung dieser Aufgabe lehrt die Erfindung, daß die beiden Spundfaßhälften jeweils in eine Hilfsvorrichtung eingesetzt werden, die eine Aufnahme und eine Abstützeinrichtung für die jeweilige Spundfaßhälfte aufweisen und in axialer Richtung gegeneinander verfahrbar sind, daß die beiden Spundfaßhälften im Bereich der herzustellenden Verbundnaht von einem Zentrierring aufgenommen werden, der über den Umfang verteilte Saugnäpfe aufweist, wobei ein Schweißkragen zur herzustellenden Verbundnaht hin über die Zentrierringe vorsteht, daß zwischen den beiden Hilfsvorrichtungen mit den beiden Spundfaßhälften ein Heizkranz angeordnet wird, in den die Schweißkragen eingeführt und in dem die Schweißkragen auf Schweißkragentemperatur erwärmt werden, daß danach die Hilfsvorrichtungen auseinandergefahren werden sowie der Heizkranz entfernt wird, und daß im Anschluß daran die mit Hilfe der Zentrierkragen zentrierten Spundwandhälften gegeneinandergefahren werden und die Schweißnaht als Stumpfschweißnaht hergestellt wird. Das geschieht vorzugsweise so, daß mit Spundfaßhälften gearbeitet wird, deren Rand im Bereich der herzustellenden Schweißnaht trompetenförmig nach außen gebogen ist, und zwar nach Maßgabe der Schrumpfung, die in diesem Bereich bei der Herstellung der Schweißnaht eintritt.

Die erreichten Vorteile sind darin zu sehen, daß das beschriebene Verfahren mit einer einfachen Hilfsvorrichtung weitgehend automatisch hergestellt werden kann. Aber auch die Anlage zeichnet sich durch Einfachheit und Funktionssicherheit aus. Sie ist gekennzeichnet durch zwei Hilfsvorrichtungen mit jeweils einer Aufnahme und einer Abstützeinrichtung für eine Spundfaßhälfte, welche Hilfsvorrichtungen in axialer Richtung gegeneinander verfahrbar sind, jeweils einen Zentrierring mit über den Umfang verteilten Saugnäpfen am inneren Bereich jeder der Hilfsvorrichtungen, über welche Zentrierringe jeweils ein Schweißkragen der Spundfaßhälften vorsteht, einen Heizkranz, der eine umlaufende Heizeinrichtung aufweist und in den Zwischenraum zwischen den beiden Hilfsvorrichtungen einführbar ist, wobei die Schweißkragen an den Spundfaßhälften durch Verfahren der Hilfsvorrichtungen in den Heizkranz einfahrbar sind und eine Einrichtung zum stumpfnahtbildenden Zu sammenfahren der Hilfsvorrichtungen nach Entfernen des Heizkranzes. Gegenstand der Erfindung ist auch ein Spundfaß, welches aus zwei im Wege des Spritzgießens geformten Spundfaßhälften besteht und nach dem beschriebenen Verfahren hergestellt ist.

Im folgenden wird die Erfindung anhand einer lediglich ein Ausführungsbeispiel darstellenden Zeichnung ausführlicher erläutert. Es zeigen

Fig. 1 bis 4 ein Schema des erfindungsgemäßen Verfahrens, welches die verschiedenen Verfahrensschritte erläutert,

Fig. 5 in gegenüber den Fig. 1 bis 4 vergrößertem Maßstab die Seitenansicht eines Zentrierringes aus dem Gegenstand der Fig. 1 bis 4,

Fig. 6 eine axiale Ansicht des Gegenstandes der Fig. 5,

Fig. 7 den vergrößerten Ausschnitt A aus dem Gegenstand nach Fig. 1,

Fig. 8 den vergrößerten Ausschnitt B aus dem Gegenstand nach Fig. 1,

Fig. 9 den vergrößerten Ausschnitt C aus dem Gegenstand nach Fig. 4,

Fig. 10 zwei Spundfaßhälften, die nach dem erfindungsgemäßen Verfahren vereinigt werden sollen,

Fig. 11 das aus den beiden Spundfaßhälften der Fig. 10 hergestellte Spundfaß,

Fig. 12 den vergrößerten Ausschnitt D aus dem Gegenstand nach Fig. 10 im Schnitt und

Fig. 13 den vergrößerten Ausschnitt E aus dem Gegenstand der Fig.11 im Schnitt.

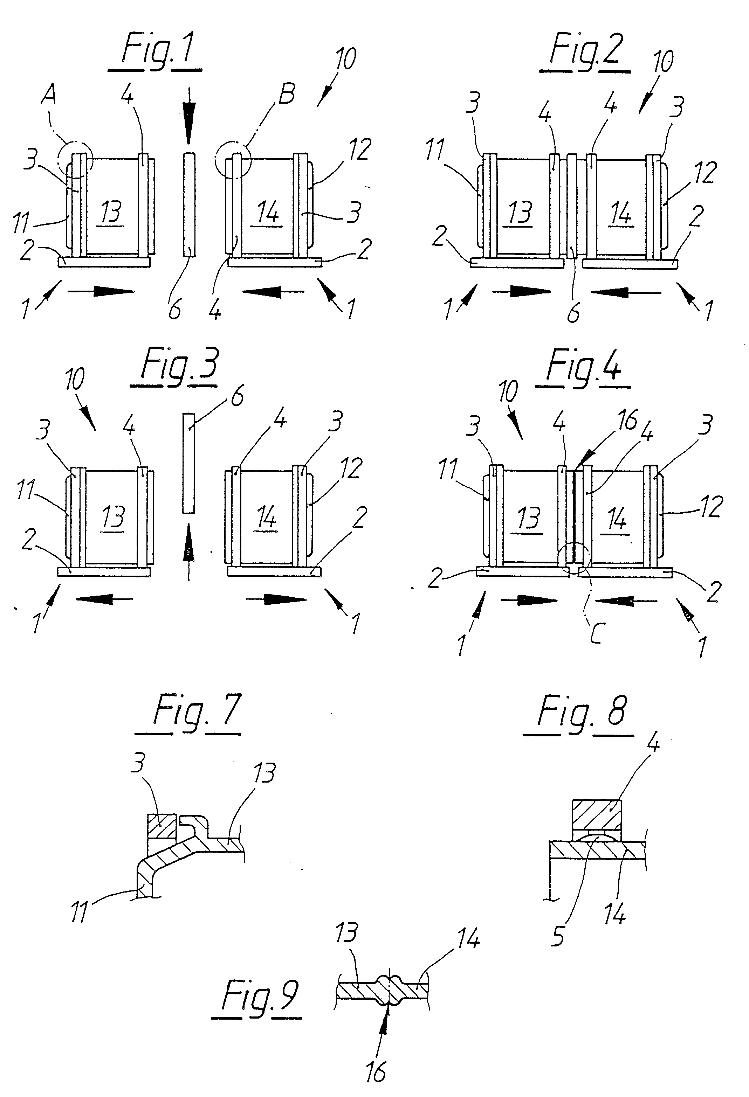

Das anhand der Fig. 1 bis 4 erläuterte Verfahren dient zur Herstellung eines Spundfasses 10 aus thermoplastischem Kunststoff mit Bodenteil 11, Deckelteil 12 und Mantel 13, 14, wobei Bodenteil 11 und Deckelteil 12 jeweils ein Mantelteilstück 13 bzw. 14 aufweisen sowie eine Spundfaßhälfte bilden, und wobei die beiden Spundfaßhälften 11, 13 und 12, 14 mit einer umlaufenden Verbundnaht 16 unter Anwendung von Druck und Wärme vereinigt werden.

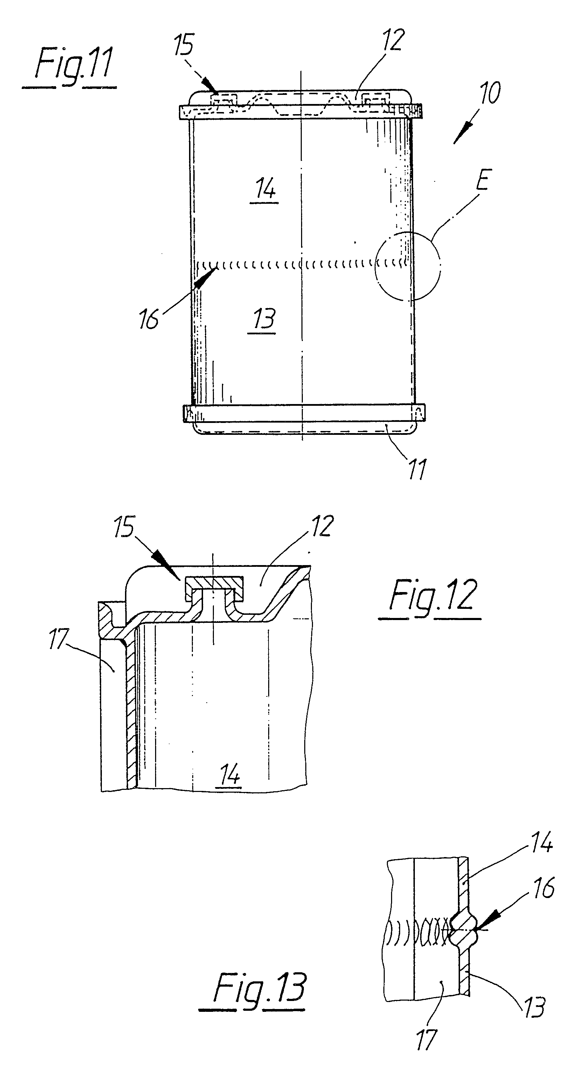

Aus einer vergleichenden Betrachtung der Fig. 1 bis 9 entnimmt man, daß die beiden Spundwandhälften 11, 13 und 12, 14 jeweils in eine Hilfsvorrichtung 1 eingesetzt werden, die eine Aufnahme 2 und Abstützeinrichtungen 3 für die jeweilige Spundfaßhälfte 11, 13 bzw. 12, 14 aufweisen und in axialer Richtung gegeneinander verfahrbar sind. Dazu wird insbes. auf die Fig. 1 verwiesen. Aus einer vergleichenden Betrachtung der Fig. 1 sowie 5, 6 und 8 entnimmt man, daß die beiden Spundfaßhälften 11, 13 und 12, 14 im Bereich der herzustellenden Verbundnaht 16 von einem Zentrierring 4 aufgenommen werden, der über den Umfang verteilte Saugnäpfe 5 aufweist, wobei ein Schweißkragen der Mantelteilstücke 13 bzw. 14 zur herzustellenden Verbundnaht 16 hin über die Zentrierringe 4 vorsteht. In der Fig. 7 erkennt man die Abstützeinrichtung 3 in Form eines Abstützringes. Aus einer vergleichenden Betrachtung der Fig. 1 und 2 entnimmt man, daß zwischen den beiden Hilfsvorrichtungen 1 mit den beiden Spundfaßhälften 11, 13 und 12, 14 ein Heizkranz 6 angeordnet wird, in den die Schweißkragen eingeführt und in dem die Schweißkragen auf Schweißtemperatur erwärmt werden. Danach werden, wie die Fig. 3 verdeutlicht, die Hilfsvorrichtungen 1 wieder auseinandergefahren, so daß der Heizkranz 6 entfernt werden kann. Danach werden mit Hilfe der Zentrierringe 4 die Spundfaßhälften 11, 13 und 12, 14 gegeneinandergefahren und die Schweißnaht 16 wird als Stumpfnaht hergestellt, wie es die Fig. 9 und 13 verwirklichen.

Die Fig. 1 bis 9 erläutern auch die Anlage für die Durchführung des erfindungsgemäßen Verfahrens. Sie ist gekennzeichnet durch zwei Hilfsvorrichtungen 1 mit jeweils einer Aufnahme 2 und einer Abstützeinrichtung 3 für eine Spundfaßhälfte 11, 13 und 12, 14, welche Hilfsvorrichtungen 1 in axialer Richtung gegeneinander verfahrbar sind, wie es die Pfeile in den Fig. 1 bis 4 verdeutlichen. Sie ist fernerhin gekennzeichnet durch jeweils einen Zentrierring 4 mit über den Umfang verteilten Saugnäpfen 5 am inneren Bereich jeder der Hilfsvorrichtungen 1, über welche Zentrierringe 4 jeweils ein Schweißkragen der Spundfaßhälften 11, 13 und 12, 14 vorsteht. Zur Vorrichtung gehört der Heizkranz 6, der eine umlaufende Heizeinrichtung aufweist und der in den Zwischenraum zwischen den beiden Hilfsvorrichtungen 1 einführbar ist, wobei die Schweißkragen an den Spundfaßhälften 11, 13 und 12, 14 durch Verfahren der Hilfsvorrichtungen 1 in den Heizkranz 6 einfahrbar sind. Außerdem ist eine Einrichtung zum stumpfenden Zusammenfahren der Hilfsvorrichtungen 1 nach Entfernen des Heizkranzes 6 und zum Auseinanderfahren der Hilfsvorrichtungen 1 vorgesehen.

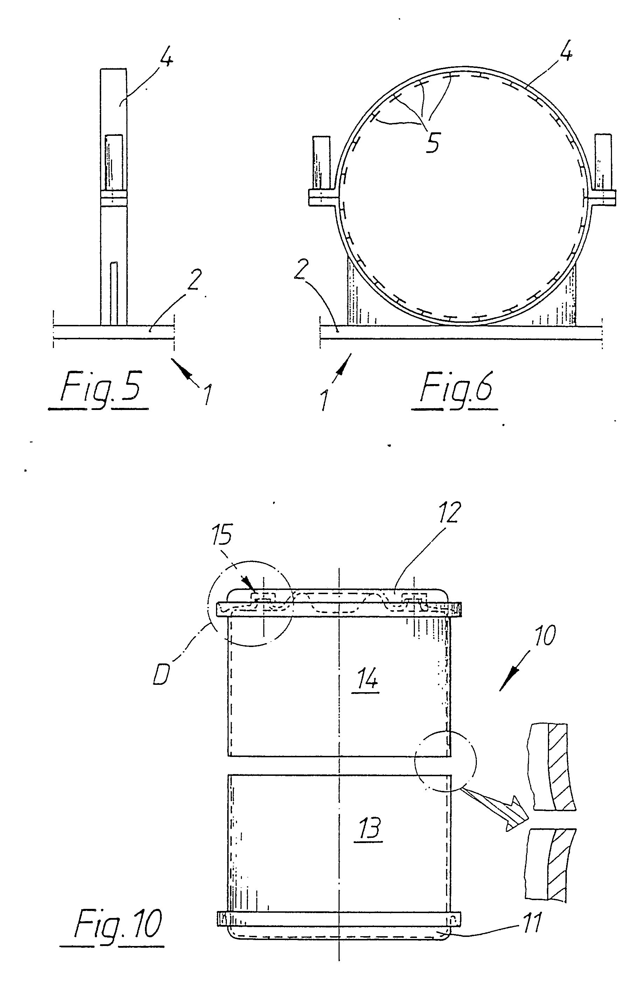

In den Fig. 10 bis 13 wird ein Spundfaß beschrieben, welches nach dem erfindungsgemäßen Verfahren hergestellt ist. Das in Fig. 10 dargestellte Spundfaß 10 besteht aus thermoplastischem Kunststoff. Es besitzt ein Bodenteil 11, ein Deckelteil 12 und einen Mantel 13, 14. Zumindest im Deckelteil 12 befindet sich zumindest eine Spundöffnung 15. Es versteht sich, daß die Spundöffnung 15 einen Spundverschluß aufweist.

Aus der Fig. 10 entnimmt man, daß das Bodenteil 11 und das Deckelteil 12 jeweils ein Mantelteilstück 13 bzw. 14 aufweisen. Diese sind im Wege des und beim Spritzgießen an das Bodenteil 11 bzw. an das Deckelteil 12 angeformt. Der vergrößerte Ausschnitt bei Fig. 10 macht deutlich, daß mit Spundfaßhälften gearbeitet wird, deren Rand im Bereich der herzustellenden Schweißnaht trompetenförmig nach außen gebogen ist, und zwar nach Maßgabe der Schrumpfung, die in diesem Bereich bei der Herstellung der Schweißnaht eintritt. Das ist in den anderen Figuren aus Maßstabsgründen nicht erkennbar. Aus einer vergleichenden Betrachtung der Fig. 10 und 11 entnimmt man, daß die beiden Mantelteilstücke 13, 14 durch eine umlaufende Schweißnaht 16 zum Mantel vereinigt sind. Die Fig. 13 macht deutlich, daß dabei mit einer Stumpfschweißnaht gearbeitet wurde. Im Ausführungsbeispiel und nach bevorzugter Ausführungsform der Erfindung sind die beiden Mantelteilstücke 13, 14 annähernd kreiszylindrisch geformt. Sie ergänzen sich folglich zu einem annähernd zylindrischen Mantel. Der Mantel könnte aber auch tonnenförmig geformt sein, wobei die Mantelteilstücke 13, 14 entsprechend teiltonnenförmig einzurichten wären. Im Ausführungsbeispiel besitzen die beiden Mantelteilstücke 13, 14 in Richtung der Faßachse gleiche Höhe. Die Schweißnaht 16 liegt also in mittlerer Höhe des Faßmantels. In Fig. 12 und 13 wurde jeweils eine Verstärkungsrippe 17 angedeutet. Die Verstärkungsrippen 17 sind vorzugsweise äquidistant über den Umfang verteilt. Sie erstrecken sich in vertikaler Richtung.

## Ansprüche

1. Verfahren zur Herstellung eines spundfasses aus thermoplastischem Kunststoff mit Bodenteil, Deckelteil und Mantel, wobei Bodenteil und Deckelteil ein Mantelteilstück aufweisen sowie eine Spundfaßhälfte bilden und wobei die beiden Spundfaßhälften mit einer umlaufenden Verbundnaht unter Anwendung von Wärme vereinigt werden, **dadurch gekennzeichnet**, daß die beiden Spundfaßhälften jeweils in eine Hilfsvorrichtung eingesetzt werden, die eine Aufnahme und eine Abstützeinrichtung für die jeweilige Spundfaßhälfte aufweisen und in axialer Richtung gegeneinander verfahrbar sind, daß die beiden Spundfaßhälften im Bereich der herzustellenden Verbundnaht von einem Zentrierring aufgenommen werden, der über den Umfang verteilte Saugnäpfe aufweist, wobei ein Schweißkragen zur herstellenden Verbundnaht hin über die Zentrierringe vorsteht, daß zwischen den beiden Hilfsvorrichtungen mit den beiden Spundfaßhälften ein Heizkranz angeordnet wird, in den die Schweißkragen eingeführt und in dem die Schweißkragen auf Schweißkragentemperatur erwärmt werden, daß danach die Hilfsvorrichtungen auseinandergefahren werden sowie der Heizkranz entfernt wird, und daß im Anschluß daran die mit Hilfe der Zentrierkragen zentrierten Spundwandhälften gegeneinandergefahren werden und die Schweißnaht als Stumpfschweißnaht hergestellt wird.

2. Verfahren nach Anspruch 1,. dadurch gekennzeichnet, daß mit Spundfaßhälften gearbeitet wird, deren Rand im Bereich der herzustellenden Schweißnaht trompetenförmig nach außen gebogen ist, und zwar nach Maßgabe der Schrumpfung, die in diesem Bereich bei der Herstellung der Schweißnaht eintritt.

3. Anlage zur Durchführung des Verfahrens nach einem der Ansprüche 1 oder 2, gekennzeichnet durch

zwei Hilfsvorrichtungen (1) mit jeweils einer Aufnahme (2) und einer Abstützeinrichtung (3) für eine Spundfaßhälfte, welche Hilfsvorrichtungen (1) in axialer Richtung gegeneinander verfahrbar sind,

jeweils einen Zentrierring (4) mit über den Umfang verteilten Saugnäpfen (5) am inneren Bereich jeder der Hilfsvorrichtungen (1), über welche Zentrierringe (4) jeweils ein Schweißkragen der Spundfaßhälften vorsteht,

einen Heizkranz (6), der eine umlaufende Heizeinrichtung auf weist und in den Zwischenraum zwischen den beiden Hilfsvorrichtungen (1) eingeführt ist, wobei die Schweißkragen an den Spundfaßhälften durch Verfahren der Hilfsvorrichtungen in den Heizkranz (6) einfahrbar sind und

eine Einrichtung zum stumpfnahtbildenden Zusammenfahren der Hilfsvorrichtungen (1) nach Entfernen des Heizkranzes (6).

4. Spundfaß, welches aus zwei im Wege des Spritzgießens geformten Spundfaßhälften (11, 13 bzw. 12, 14) besteht und nach dem Verfahren gemäß Anspruch 1 und 2 hergestellt ist.

Fig.1

Fig.2

Fig.3

Fig.4

Fig.7

Fig.8

Fig.9

_Fig.5_  _Fig.6_

_Fig.10_

_Fig.11_

15    12

10

14

E

16

13

11

_Fig.12_

15    12

17

14

14

16

13

_Fig.13_

17